# EUROPÄISCHE PATENTSCHRIFT

(11) **EP 0 376 377 B1**
(45) Veröffentlichungstag und Bekanntmachung des Hinweises auf die Patenterteilung: **02.10.1996**
(21) Anmeldenummer: 89203222.8
(22) Anmeldetag: 18.12.1989
(51) Int. Cl.: G02B 6/44, H01B 13/00

(54) **Verfahren zum Einblasen einer Leitung in eine Leerhülle**
Method of pneumatically inserting a cable in a sheath
Procédé de mise en place pneumatique d'un film dans un tube

(30) Priorität: 24.12.1988 DE 3843777
(43) Veröffentlichungstag der Anmeldung: 04.07.1990
(73) Patentinhaber: Alcatel Kabel AG & Co., D-30179 Hannover (DE)
(72) Erfinder: Kölschbach, Veit, D-5000 Köln 90 (DE); Lachmann, Dieter, D-5200 Siegburg (DE); Znoyek, Gerald, D-5090 Leverkusen 1 (DE)
(74) Vertreter: Mende, Eberhard, Dipl.-Ing.

(56) Entgegenhaltungen:
- DE-B- 1 209 839
- FR-A- 2 297 378
- US-A- 4 726 564
- PATENT ABSTRACTS OF JAPAN, Band 12, Nr. 483 (P-802)[3330], 16. Dezember 1988; & JP-A-63 199 307

## Beschreibung

Die Erfindung bezieht sich auf ein Verfahren zum Einblasen einer Leitung in eine Leerhülle, bei welchem die Leitung von einem Vorratswickel abgezogen und mittels in die Leerhülle geblasener Druckluft in die Leerhülle gefördert wird.

Bei einem in Br.Telecom Technol. 87, Seiten 20 bis 24 beschriebenen derartigen Verfahren wird eine optische Leitung zunächst mit losen Windungen in einen Aufnahmebehälter gelegt, wobei eine Torsionsumdrehung pro Windung vorgesehen ist. Aus diesem Aufnahmebehälter wird die Leitung beim Einblasen in eine Kabelhülle ohne Drehung des Aufnahmebehälters abgezogen. Dabei brauchen keine großen Massen beschleunigt zu werden. Mit dem Einblasverfahren können Leitungen in Kanäle oder Leerhüllen eines Kabels in beträchtlicher Länge eingezogen werden. Für den Abzug der Leitung sind spezielle und störungsempfindliche Führungseinrichtungen erforderlich. Bei höheren Abzugsgeschwindigkeiten können die frei im Aufnahmebehälter gegeneinander verschiebbaren Windungen verrutschen und verklemmen.

Der Erfindung liegt die Aufgabe zugrunde, das Verfahren der eingangs genannten Art zu vereinfachen und auch bei hohen Abzugsgeschwindigkeiten einen störungsfreien Ablauf der Leitung aus einem Vorratswickel zu ermöglichen.

Die Lösung der Aufgabe ist in Anspruch 1 beschrieben. Ein Merkmal der Lösung ist, daß der Vorratswickel aus einem wickelkörperlosen selbsttragenden Kreuzwickel besteht.

Die Leitung kann mindestens einen elektrischen Leiter oder mindestens einen Lichtwellenleiter (LWL) enthalten.

Ein erfindungsgemäß verwendeter Kreuzwickel kann zum Abschluß der Leitungsfertigung hergestellt werden. Er kann danach vor Ort ohne Umwickelmaßnahmen direkt für das Einblasen der Leitung in eine Leerhülle verwendet werden. Ein solcher Kreuzwickel bildet ohne jeglichen Tragkörper eine frei tragende stabile Einheit und ermöglicht die Speicherung einer hohen Leitungslänge in kleinem Volumen. Bei hohen Abzugsgeschwindigkeiten kann die Leitung störungsfrei abgezogen werden, ohne daß Verklemmungen entstehen. Die erforderlichen Abzugskräfte sind besonders gering, so daß meist ohne zusätzliche mechanische Fördereinrichtungen allein die durch die Druckluft bewirkten Förderkräfte ausreichen.

Da keine speziellen Aufnahmebehälter für den Kreuzwickel erforderlich sind, kann der erfindungsgemäße Kreuzwickel in einem Behälter angeordnet werden, welcher über eine Zuführungsöffnung mit Druckluft beaufschlagbar ist und eine Auslaßöffnung zum Anschluß der Leerhülle aufweist. Dabei ergibt sich der wesentliche Vorteil, daß die Leitung nicht über einen abzudichtenden und deshalb zusätzliche Reibungskraft verursachenden Einlaufkanal in einen mit Druckluft beaufschlagten Behälter eingeführt werden muß.

Der Kreuzwickel kann mit einem besonders gut geordneten Aufbau hergestellt werden, wenn die Leitung eine ihren Leiter umgebende Hülle aufweist, welche im Verband des Kreuzwickels, insbesondere an den Kreuzungsstellen der Windungen eine in Richtung der Wickelebene verbreiterte abgeflachte Querschnittskontur aufweist.

Eine einfach herstellbare Lösung ist dadurch gekennzeichnet, daß der Wickel mit einer Leitung gewickelt ist, deren kreisrunde Hülle einen E-Modul von kleiner als 1 GPa aufweist. Die ursprünglich kreisrunde Hülle verformt sich beim Wickelvorgang in die gewünschte flache Form. Dafür sind Stoffe mit einem geringen E-Modul von weniger als 1 GPa geeignet, wie insbesondere thermoplastisches Polyurethan oder Weich-Polyvinylchlorid.

Gemäß einer besonders vorteilhaften Lösung ist vorgesehen, daß der Leiter mit Abstand von einer schlauchartigen Hülle umgeben ist. Dabei ergibt sich selbst bei Verwendung von härteren Werkstoffen für die Hülle beim Wickelvorgang die gewünschte flache Querschnittskontur. Dabei wird insbesondere bei einem LWL bevorzugt, daß zwischen die schlauchartige Hülle und den Leiter bzw. LWL eine gelartige Masse eingebracht ist. Eine die an sich bekannten Vorteile aufweisende gelartige Masse läßt dabei die gewünschte Verformung der schlauchartigen Hülle zu einer flachen Querschnittskontur zu. Im Gegensatz zu einer festen Umhüllung werden bei der letzgenannten Lösung im Falle eines LWL geringere Dämpfungserhöhungen verursacht. Für die Kunststoffhülle können relativ harte Werkstoffe verwendet werden wie insbesondere Polybutylenterephthalat und elastomer-modifiziertes Polybutylenterephthalat. Auch Polyamide haben sich als vorteilhaft geeignet erwiesen.

Es ist ohne weiteres möglich, daß innerhalb der Hülle, insbesondere bei einem LWL, zusätzlich mindestens ein Zugentlastungselement, insbesondere in Form mindestens eines faserartigen Elements angeordnet ist.

Eine vorteilhafte Möglichkeit, eine Leitung mit einem LWL in ihrer Lage im Wickel zu fixieren, besteht darin, daß innerhalb der Hülle zusätzlich ein sich beim Wickelvorgang plastisch verformender Metalldraht angeordnet ist.

Die Lagesicherung der Leitung im Wickel wird weiterhin dadurch erhöht, daß der Reibungskoeffizient der Hülle größer als u = 0,3 ist. Zusätzlich können die Haltekräfte polarer Werkstoffe (z.B. Polyurethan) zum Zusammenhalt des Wickels beitragen.

Es hat sich gezeigt, daß der Steigungswinkel der Leitung relativ zu einer Querschnittsebene des Kreuzwickels aus Stabilitätsgründen möglichst groß sein sollte, andererseits aber möglichst klein, um ein schnelles störungsfreies Abziehen der Leitung zu ermöglichen. Als vorteilhafte Kompromißlösung ist vorgesehen, daß der Steigungswinkel einer Leitung relativ zu einer Querschnittsebene der Kreuzspule in jeder Wickellage im Bereich von 2^{o} bis 30^{o}, vorzugsweise im Bereich von 4^{o} bis 10^{o} liegt.

Ein für diese Ausführungsform des Kreuzwickels vorteilhaftes Herstellungsverfahren ist dadurch gekennzeichnet, daß in Abhängigkeit vom beim Wickelvorgang erreichten jeweiligen Durchmesser des Kreuzwickels der Steigungswinkel derart nachgestellt wird, daß er im Bereich von 2^{o} bis 30^{o}, vorzugsweise im Bereich von 4^{o} bis 10^{o} liegt.

Die Nachstellung des Steigungswinkels erlaubt es, auch Spulen mit hohen Lagezahlen unter Einhaltung der vorgenannten Grenzen für den Steigungswinkel herzustellten. Derart wird verhindert, daß der Steigungswinkel mit zunehmendem Wickeldurchmesser stetig abnimmt, wodurch der Wickel instabil würde.

Beim Abwickelvorgang der Leitung von einem nicht drehenden Wickel entstehen Torsionen. Deshalb ist vorgesehen, daß die LWL-Ader im Wickel über die gesamte Länge mit einer Torsion gewickelt ist.

Bei der Herstellung des Wickels wird dabei eine gegenkompensierende Torsion aufgebracht, so daß die abgezogene Leitung torsionsfrei ist.

Besonders einfach läßt sich die wickeltechnisch vorteilhafte flache Form der Leitung ohne zusätzliche Maßnahmen bereits dadurch erreichen, daß er mit einer Mehrfachleitung gewickelt ist, die aus mehreren nebeneinander verbundenen Einzelleitungen besteht.

Die Erfindung wird anhand der Beschreibung von in der Zeichnung dargestellten vorteilhaften Ausführungsbeispielen näher erläutert.
- Fig. 1: zeigt schematisch eine Vorrichtung zur Ausübung des erfindungsgemäßen Verfahrens.
- Fig. 2: zeigt die Seitenansicht einer Kreuzspule nach Fig. 1, zur Hälfte geschnitten.
- Fig. 3: zeigt den Querschnitt eine Leitung, welche im Ausgangszustand eine verbreiterte Umhüllung aufweist.
- Fig. 4: zeigt den Querschnitt einer Leitung mit im Ausgangszustand kreisrunder weicher Kunststoffumhüllung.
- Fig. 5: zeigt eine sich im gewickelten Zustand einstellende Querschnittsform eines mit einer Gelzwischenschicht und einer Kunststoffhülle umgebenen LWL.

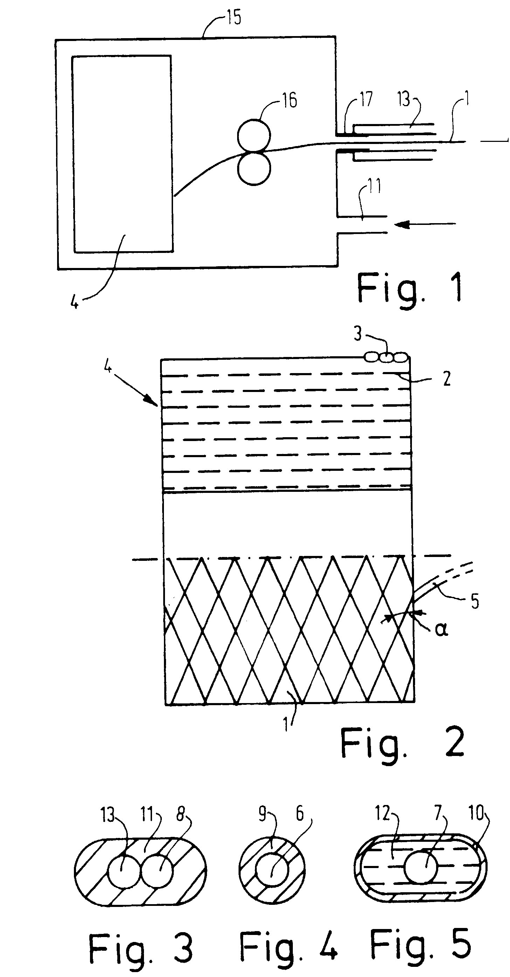

In Fig. 1 ist der Endbereich einer Leerhülle 13 (z.B. extrudierter Kunststoffschlauch oder Stahlröhrchen) angedeutet, in welche eine Leitung 1, z.B. ein umhüllter LWL oder ein isolierter elektrischer Leiter eingeblasen werden soll. Dazu dient ein über die Zuleitung 14 mit Druckluft beaufschlagter Behälter 15, in welchen ein Kreuzwickel 4 mit dem erforderlichen Vorrat der Leitung 1 eingebracht ist. Bei Bedarf kann der Abzug der Leitung 1 in die Leerhülle 13 durch Förderräder 16 unterstützt werden.

Die Leerhülle ist abgedichtet mit dem Auslaßstutzen 17 des Behälters 15 verbunden.

Bei dem in Figur 2 schematisch und nicht maßstäblich gezeichneten Kreuzwickel 4 ist in der unteren Hälfte der für einen Kreuzwickel typische Verlauf der Windungen einer Leitung 1 erkennbar, welche mit einem Steigungswinkel gewickelt sind. In der im Längsschnitt angedeuteten oberen Hälfte sind durch gestrichelte Linien 2 Wickelebenen einer Vielzahl von radial übereinanderliegenden Wickellagen angedeutet. Von der äußersten Wickellage sind Querschnittsformen 3 der Leitung 1 erkennbar. Die breiteren Querschnittsseiten erstrecken sich in Richtung der Ebenen ihrer Wickellagen.

Der Steigungswinkel der Windungen 1 gegenüber einer Querschnittsebene des Kreuzwickels 4 wurde in allen Lagen auf einen von 8^{o} nur wenig abweichenden Wert eingestellt. Dabei wurde das Verhältnis der Wickeldrehzahl und der Geschwindigkeit der axialen Führung der Leitung 1 in ständiger Anpassung geändert, so daß der Winkel innerhalb des Bereiches von 4^{o} bis 10^{o} gehalten wurde. Eine solche Anpassung kann stetig erfolgen. Sie erfolgte im bevorzugten Ausführungsbeispiel stufig nach Herstellung jeweils einiger Wickellagen, da ein gewisser Schwankungsbereich des Steigungswinkels erlaubt ist.

Verschiedene Querschnittsformen einer LWL enthaltenden Leitung 1 sind gegenüber Position 3 in Fig. 2 vergrößert in den Figuren 3,4 und 5 erkennbar. Die LWL 6,7 bzw. 8 haben einschließlich ihres Kunststoffcoatings einen Durchmesser von etwa 250 um. Sie sind von aufextrudierten Hüllen 9,10 bzw. 11 umgeben.

Bei der Ausführungsform nach Fig. 3 ist parallel zum LWL 8 ein plastisch verformbarer Metalldraht 13 in der Kunststoffhülle 11 angeordnet. Es ergibt sich eine abgeflachte Querschnittsform, welche das Wickeln einer gleichmäßigen Kreuzspule erleichtert. Der plastisch verformbare Metalldraht 13 hält die Wickellage der Ader nach Fig. 2 entgegen der elastischen Rückstellkräfte des LWL 8 auch an Umkehrstellen der Wickelsteigung bei, selbst wenn die Oberfläche der Kunststoffhülle 11 relativ glatt und klebefrei ist.

Bei der Ausführungsform einer LWL-Ader nach Fig. 4 ist der LWL 6 lediglich von einer besonders weichen und nicht zu dünnen Kunststoffhülle umgeben, welche beim Wickeln der Kreuzspule in einen länglichen Querschnitt ähnlich den Figuren 2 und 4 verformt wird, so daß zumindest annähernd gleich gute Wickelergebnisse erzielt werden, wie bei einer bereits ursprünglich vorhandenen länglichen Querschnittsform.

Für die Hülle 9 haben sich Kunststoffe mit einem E-Modul von weniger als 1 GPa als vorteilhaft geeignet erwiesen. Deshalb wurden insbesondere thermoplastisches Polyurethan oder Weich-Polyvinylchlorid verwendet.

Bei der Abwandlung nach Fig. 5 können steifere Hüllen 10 verwendet werden, da die Nachgiebigkeit der Querschnittsform durch eine gelartige Zwischenschicht 12 erreicht wird, welche zusätzlich die Dämpfungserhöhungen des LWL verhindert.

In Fig. 5 ist die sich im Kreuzwickel einstellende Querschnittsform angedeutet. Ursprünglich wurde um den LWL 7 eine diesen konzentrisch umgebende kreisrunde Kunststoffhülle 12 extrudiert.

Wenn der Reibungskoeffizient der Hülle 9 oder der Hülle 12 größer als u = 0,3 ist, hält der Kreuzwickel auch ohne Kleberbeschichtung der Adern hervorragend zusammen und läßt sich störungsfrei mit hoher Geschwindigkeit abwickeln.

## Patentansprüche

1. Verfahren zum Einblasen einer Leitung (1) in eine Leerhülle (13), bei welchem die Leitung (1) von einem Vorratswickel abgezogen und mittels in die Leerhülle (13) geblasener Druckluft in die Leerhülle (13) gefördert wird, dadurch gekennzeichnet, daß der Vorratswickel aus einem wickelkörperlosen selbsttragenden Kreuzwickel (4) besteht, und daß die Leitung (1) eine ihren Leiter umgebende Hülle (9,10,11) aufweist, welche im Verband des Kreuzwickels (4) insbesondere an den Kreuzungsstellen der Windungen eine in Richtung dec Wickelebene (2) verbreiterte abgeflachte Querschnittskontur aufweist.

2. Verfahren nach Anspruch 1
dadurch gekennzeichnet, daß der Kreuzwickel mit einer Leitung (1) gewickelt ist, deren kreisrunde Hülle (9) einen E-Modul von kleiner als 1 GPa aufweist.

3. Verfahren nach Anspruch 2,
dadurch gekennzeichnet, daß die Hülle (9) aus thermoplastischem Polyurethan oder Weich-Polyvinylchlorid besteht.

4. Verfahren nach Anspruch 1,
dadurch gekennzeichnet, daß der Leiter (7) mit Abstand von einer schlauchartigen Hülle (10) umgeben ist.

5. Verfahren nach Anspruch 4,
dadurch gekennzeichnet, daß zwischen die schlauchartige Hülle (10) und den Leiter (7) eine gelartige Masse (12) eingebracht ist.

6. Verfahren nach Anspruch 4 oder 5,
dadurch gekennzeichnet, daß die schlauchartige Hülle (10) aus Polybutenterephthalat oder elastomer modifiziertem Polybutylenterephthalat besteht.

7. Verfahren nach einem der Ansprüche 2 bis 6,
dadurch gekennzeichnet, daß innerhalb der Hülle (9,10,11) zusätzlich mindestens ein Zugentlastungselement, insbesondere in Form mindestens eines faserartigen Elements angeordnet ist.

8. Verfahrren nach einem der Ansprüche 1 bis 7, dadurch gekennzeichnet,
daß der Leiter als Lichtwellen leiter ausgebildet ist, und daß innerhalb der Hülle (11) zusätzlich ein sich beim Wickelvorgang plastisch verformender Metalldraht (13) angeordnet ist.

9. Verfahren nach einem der Ansprüche 2 bis 8,
dadurch gekennzeichnet, daß der Reibungskoeffizient u der Hülle (9,10,11) größer als 0,3 ist.

10. Verfahren nach einem der Ansprüche 2 bis 9,
dadurch gekennzeichnet, daß die Leitung (1) im Wickel über die gesamte Länge mit einer Torsion gewickelt ist.

11. Verfahren nach einem der Ansprüche 2 bis 10,
dadurch gekennzeichnet, daß der Steigungswinkel der Windungen und der Leitung (1) relativ zu einer Querschnittsebene der Kreuzspule in jeder Wickellage im Bereich von 2° bis 30°, vorzugsweise im Bereich von 4° bis 10° liegt.

12. Verfahren nach Anspruch 1,
dadurch gekennzeichnet, daß die Leitung eine Mehrfachleitung ist, die aus mehreren nebeneinander augeordneten, verbundenen Einzelleitungen besteht.

## Claims

1. Method of inserting a line (1) pneumatically into an empty sheath (13), in which method the line (1) is drawn off from a supply coil and conveyed into the empty sheath (13) by means of compressed air blown into the empty sheath (13) characterized in that the supply coil consists of a formerless self-supporting cross-wound coil (4), and in that the line (1) has a sheath (9,10,11) surrounding its conductor and which, in the cross-wound coil assembly (4), in particular at the crossing points of the windings, has a cross-sectional contour which is broadened and flattened in the direction of the winding plane (2).

2. Method according to Claim 1, characterized in that the cross-wound coil is wound using a line (1) whose circular sheath (9) has a modular of elasticity of less than 1 GPa.

3. Method according to Claim 2, characterized in that the sheath (9) consists of thermoplastic polyurethane or soft polyvinylchloride.

4. Method according to Claim 1, characterized in that the conductor (7) is surrounded at a distance by a tube-like sheath (10).

5. Method according to Claim 4, characterized in that a gel-like compound (12) is introduced between the tube-like sheath (10) and the conductor (7).

6. Method according to Claim 4 or 5, characterized in that the tube-like sheath (10) consists of polybutylene terephthalate or elastomer-modified polybutylene terephthalate.

7. Method according to one of Claims 2 to 6, characterized in that at least one strain-relief element, in particular in the form of at least one fibre-like element, is additionally arranged within the sheath (9,10,11).

8. Method according to one of Claims 1 to 7, characterized in that the conductor is designed as an optical waveguide, and in that a metal wire (13) which deforms plastically during the winding process is additionally arranged within the sheath (11).

9. Method according to one of Claims 2 to 8, characterized in that the coefficient of friction u of the sheath (9,10,11) is greater than 0.3.

10. Method according to one of Claims 2 to 9, characterized in that the line (1) in the coil is wound over the entire length with a torsion.

11. Method according to one of Claims 2 to 10, characterized in that the pitch angle of the windings and of the line (1) relative to a cross-sectional plane of the cross-wound spool lies in each winding layer in the region from 2° to 30°, preferably in the range from 4° to 10°.

12. Method according to Claim 1, characterized in that the line is a multiple line which consists of a plurality of connected individual lines arranged alongside one another.

## Revendications

1. Procédé de mise en place pneumatique d'un câble dans un tube (13), dans lequel le câble (1) est tiré d'une bobine d'alimentation, et est acheminé dans le tube (13) au moyen d'air comprimé insufflé dans le tube (13), caractérisé en ce que la bobine d'alimentation est constituée par une bobine croisée (4) autoporteuse, sans corps de bobine, et en ce que le câble (1) présente une gaine (9,10,11) entourant son conducteur, ladite gaine présentant une section élargie et aplatie dans la direction du plan de bobinage (2), au niveau de l'assemblage de la bobine croisée (4), en particulier aux points d'intersection des spires.

2. Procédé suivant la revendication 1, caractérisé en ce que le bobinage de la bobine croisée est fait avec un câble (1) dont la gaine (9) circulaire présente un coefficient d'élasticité inférieur à 1 GPa.

3. Procédé suivant la revendication 2, caractérisé en ce que la gaine (9) est composée de polyuréthanne thermoplastique ou de PVC mou.

4. Procédé suivant la revendication 1, caractérisé en ce que le conducteur (7) est entouré, avec un certain espacement, par une gaine en forme de tuyau (10).

5. Procédé suivant la revendication 4, caractérisé en ce qu'une masse (12) sous forme d'un gel est introduite entre la gaine (10) en forme de tuyau et le conducteur (7).

6. Procédé suivant la revendication 4 ou 5, caractérisé en ce que la gaine (10) en forme de tuyau est composée de polybutène-téréphtalate ou de polybutène-téréphtalate modifié à l'élastomère.

7. Procédé suivant l'une des revendications 2 à 6, caractérisé en ce qu'au moins un élément de décharge de traction, en particulier sous la forme d'au moins un élément fibreux, est disposé en outre à l'intérieur de la gaine (9, 10, 11).

8. Procédé suivant l'une des revendications 1 à 7, caractérisé en ce que le conducteur est réalisé sous la forme d'une fibre optique, et en ce qu'un fil métallique (13), se déformant plastiquement lors de l'opération de bobinage, est en outre disposé à l'intérieur de la gaine (11).

9. Procédé suivant l'une des revendications 2 à 8, caractérisé en ce que le coefficient de friction de la gaine (9, 10, 11) est supérieur à 0,3.

10. Procédé suivant l'une des revendications 2 à 9, caractérisé en ce que le câble (1) est enroulé en bobine avec une torsion sur toute sa longueur.

11. Procédé suivant l'une des revendications 2 à 10, caractérisé en ce que l'angle de torsion des spires et du câble (1) par rapport à un plan de section de la bobine croisée se situe pour toutes les couches de bobinage dans une plage allant de 2° à 30°, de préférence de 4° à 10°.

12. Procédé suivant la revendication 1, caractérisé en ce que le câble est un câble multiple, constitué de plusieurs câbles individuels adjacents et reliés les uns aux autres.
